# EUROPEAN PATENT SPECIFICATION

(11) **EP 3 929 871 B1**
(45) Date of publication and mention of the grant of the patent: **28.10.2026**
(21) Application number: 19920847.1
(22) Date of filing: 25.12.2019
(51) Int. Cl.: G06T 7/62, G06T 7/12, G06T 3/00

(54) **PICTURE PROCESSING METHOD, PICTURE SET PROCESSING METHOD, COMPUTER DEVICE, AND STORAGE MEDIUM**
BILDVERARBEITUNGSVERFAHREN, BILDSATZVERARBEITUNGSVERFAHREN, COMPUTERVORRICHTUNG UND SPEICHERMEDIUM
PROCÉDÉ DE TRAITEMENT D'IMAGE, PROCÉDÉ DE TRAITEMENT D'ENSEMBLE D'IMAGES, DISPOSITIF INFORMATIQUE ET SUPPORT DE STOCKAGE

(30) Priority: 25.03.2019 CN 201910228955
(43) Date of publication of application: 29.12.2021
(73) Proprietor: Shanghai Hode Information Technology Co., Ltd., Pudong New District Shanghai 200120 (CN)
(72) Inventor: CHEN, Simin, Shanghai 200120 (CN); LI, Jie, Shanghai 200120 (CN); YAO, Shi, Shanghai 200120 (CN); YAN, Biao, Shanghai 200120 (CN)
(74) Representative: Zimmermann, Tankred Klaus
(86) International application number: PCT/CN2019/128467
(87) International publication number: WO 2020/192212

(56) References cited:
- WO-A2-03/017204
- CN-A- 101 937 571
- CN-A- 109 242 787
- CN-A- 109 377 499
- US-A1- 2015 199 033
- US-A1- 2017 161 592
- US-A1- 2017 228 867
- US-B1- 8 427 483
- TOUSSAINT GODFRIED: "Solving Geometric Problems with the Rotating Calipers", 1 May 1983 (1983-05-01), pages 1 - 8, XP055901603, Retrieved from the Internet <URL:https://www.cs.swarthmore.edu/~adanner/cs97/s08/pdf/calipers.pdf>

## Description

### TECHNICAL FIELD

The present application relates to a technical field of data processing and particularly to a method and an apparatus of processing picture, a storage medium, and a computer program product.

### BACKGROUND

In animation, comics, film and television, games and other related industries, it is needed to design and produce images of people, animals or appliances in a drawing software at the initial stage. Usually, these images are composed of a plurality of pictures. After the image produced by the drawing software is exported, and before performing the subsequent action designing and other processing, an image is divided into different image units, and each image unit includes one or more pictures to achieve control for a single image unit.

In the prior art, when using Photoshop to make the above-mentioned image, it is distributed in a plurality of layers. In the prior art, when the image is split into different image units, all layer attributes are hidden, and then the entire image is displayed, then it is divided and cropped according to the image. The inventor found that this processing method has the following two problems: first, size of a fragmented image formed after cropping is large, which limits a further improvement of the image loading speed and a further reduction of memory consumption of the subsequent processing program; second, this cropping method is slow, especially for complex images, which takes a long time to read data and display the image, and requires a large number of cropping steps, and the overall response time is long. In addition, the image splitting tool in the prior art is a script tool of the Photoshop, and each time the image is split, the Photoshop needs to be opened, which is complicated to operate.

US8427483B1 relates to techniques for associating a graphics object with one of a plurality of target regions of a graphical object template. The graphics object is associated with one of the target regions based on the distance between the center of mass of the graphics object and the center of mass of the target region and the overlap amount of the graphics object with the target region. A pre-generated graphics object (stamp object) may also be automatically incorporated into one of the target regions based on the alignment of the minimum bounding box of the stamp object and the minimum bounding box of the target region.

US20150199033A1 relates to a method for simulating a graphics tablet based on pen shadow cues, the method applying to execution in a computer for simulating a graphics tablet and comprising the steps of: capturing an image; identifying a tablet from the image according to a predetermined tablet recognition procedure; identifying a pen entering the tablet according to a predetermined pen recognition procedure; and detecting a pen shadow of the pen according to a predetermined pen shadow recognition procedure and determining the relationship of contact and separation between the pen and the pen shadow for simulating the graphics tablet. Since the present invention can use a single webcam to simulate the graphics tablet, the drawbacks including inconvenience, heaviness, vulnerability and high cost of conventional graphics tablets can be overcome by the present invention.

WO03017204A2 relates to a system for rendering a multiplicity of dynamic three-dimensional objects in a virtual environment, the system comprising a memory for storing a plurality of sample images representing the objects viewed from different angles, the system further comprising processing means configured for: for each object to be displayed, selecting a sample image from the memory based on the angle of viewing the object, wherein the pixels of the sample image include an alpha channel value for identifying a plurality of different regions of the image; mapping the sample image to a polygon representing the location of the object in the environment, including performing multi-pass rendering of the sample image, wherein each pass is for rendering differently coloured regions of the sample image identified by the alpha channel values.

Godfried Toussaint, "Solving Geometric Problems with the Rotating Calipers", PROCEEDINGS OF IEEE MELECON'83, Athens, Greece, MAY 1, 1983, pages 1-8 relates to a method for solving geometric problems with the rotating calipers. This paper showed that several sets of calipers can be used simulta-neously on one convex polygon, or one set of calipers can be used on several convex polygons simultaneously.

### SUMMARY

The purpose of the present application is to provide a method and an apparatus of processing picture, a storage medium, and a computer program product which are used to solve the technical problems of large pictures, large size of generated atlas, and low utilization of atlas space in the prior art.

In order to achieve the above purpose, the invention is set out in the appended set of claims.

In the method and apparatus of processing picture, the storage medium, and the computer program product provided by the present application, the data obtained from the picture to be processed is pixel-level data or can be converted into pixel-level data, wherein the pixels that make up the image are the first pixels, and the pixels that make up the image background are the second pixels. By rotating the picture to be processed, pictures with images at different angles can be obtained. At least two pictures are selected to calculate the bounding box area surrounding the image respectively. Finally, the second pixels outside the bounding box in the picture with a smaller bounding box area are deleted, and more second pixels are deleted, thus, on the basis of not affecting the image expression, the size of the picture is reduced, which can improve the speed of subsequent programs to load the picture, and reduce the memory consumption needed of picture processing. In addition, when the atlas is generated, the size of the atlas can be reduced, the space utilization of the atlas can be improved, and the data loading speed of the atlas can be improved.

### BRIEF DESCRIPTION OF THE DRAWINGS

Fig. 1 is a flowchart of a method of processing picture provided by a first embodiment of the present application;
Fig. 2 is a schematic diagram of an image bounding box in a picture provided by an embodiment of the present application;
Fig. 3 is a schematic diagram of the image bounding box in another picture provided by the embodiment of the present application;
Fig. 4 is a schematic diagram of steps of calculating a bounding box area surrounding an image on a picture to be processed in the method of processing picture provided by the first embodiment of the present application;
Fig. 5 is a schematic diagram of calculating the bounding box area provided by the first embodiment of the present application;
Fig. 6 is a flowchart of a method of processing atlas provided by a second embodiment of the present application;
Fig. 7 is a schematic diagram of the picture to be processed provided by an embodiment of the present application;
Fig. 8 is a schematic diagram of an intermediate picture provided by an embodiment of the present application;
Fig. 9 is a flowchart of a method of producing animation provided by a third embodiment of the present application;
Fig. 10 is a schematic diagram of an initial angle picture provided by an embodiment of the present application;
Fig. 11 is a block diagram of an apparatus of processing picture provided by a fourth embodiment of the present application;
Fig. 12 is a block diagram of an apparatus of processing atlas provided by a fifth embodiment of the present application;
Fig. 13 is a block diagram of an apparatus of producing animation provided by a sixth embodiment of the present application; and
Fig. 14 is a hardware structure diagram of a computing device provided by a seventh embodiment of the present application.

### DETAILED DESCRIPTION OF EMBODIMENTS

To make the objectives, technical solutions and advantages of the present application more comprehensible, the present application is described in further detail below with reference to embodiments and the accompanying drawings. It should be understood that the specific embodiments described herein are merely used for explaining the present application, and are not intended to limit the present application.

In the present application, a method of processing picture, a method of processing atlas based on the method of processing picture, and a method of producing animation based on the method of processing atlas are provided. At the same time, a computing device is also provided, and when a processor of the computing device executes computer-readable instructions stored on a memory, the steps of any one of the above methods are realized. At the same time, a computer-readable storage medium is provided, the computer-readable storage medium stores computer-readable instructions, and when the computer-readable instructions are executed by a processor, the steps of any one of the above methods are implemented. In addition, an apparatus of processing picture corresponding to the above-mentioned method of processing picture, an apparatus of processing atlas corresponding to the above-mentioned method of processing atlas, and an apparatus of producing animation corresponding to the above-mentioned method of producing animation are also provided.

In the method of processing picture provided by the present application, the picture to be processed is rotated, so that the picture to be processed is at different angles, that is, images in the picture are at different angles, and then a bounding box area surrounding the image at different angles is calculated to find a smaller image bounding box, and then in the picture of the smaller image bounding box, pixels that constitute the image background outside the bounding box are removed, thus, the size of the picture is reduced, and then the speed of subsequent programs to load the picture can be improved, and the memory consumption needed to process the picture can be reduced. In addition, when the atlas is generated, the size of the atlas can be reduced, the space utilization of the atlas can be improved, and the data loading speed of the atlas can be improved.

In the method of processing atlas provided by the present application, a picture file to be processed includes a plurality of layers, each layer is regarded as a picture to be processed, and the picture to be processed is processed according to any one of the methods of processing picture provided by the present application. Finally, processed pictures are assembled into an atlas. Since the processed pictures processed by the method of processing picture provided by the present application are smaller, the atlas formed is also smaller, and more pictures can be set in the same size atlas, which improves the space utilization of the atlas and reduces the memory occupied by subsequent programs in the process of processing the atlas. In addition, the present application directly reads the file stream of the picture file to be processed, takes each layer of the picture file to be processed as a separate picture, the picture can be cropped at a pixel level. Compared with the prior art, which reads the data, draws the image, hides all layer attributes, and directly divides the whole image, the overall processing speed is faster.

In the method of producing animation provided by the present application, the atlas corresponding to the obtained animation is an atlas obtained by any one of the methods of processing atlas provided by the present application. Pictures in the atlas are obtained by any one of the methods of processing pictures provided by the present application, therefore, the pictures in the atlas have a corresponding rotation angle relative to the original pictures to be processed. In the method of producing animation, after the atlas is obtained, each picture in the atlas is rotated back to the original angle to obtain the initial angle picture. In the initial angle picture, the angle of the image is restored to the original angle, and then each initial angle picture is animated. On the one hand, because the atlas occupies a small amount of memory, during the animation production process, the device memory is reduced, on the other hand, the image is ensured at the original angle before animation production, without the need for the user to adjust the angle of the image, which improves the user's experience.

The specific embodiments of the method of processing picture, the method of processing atlas, and the method of producing animation provided by the present application, the apparatus corresponding to each method, the computing device and the computer storage medium will be described in detail below through respective embodiment.

### Embodiment 1

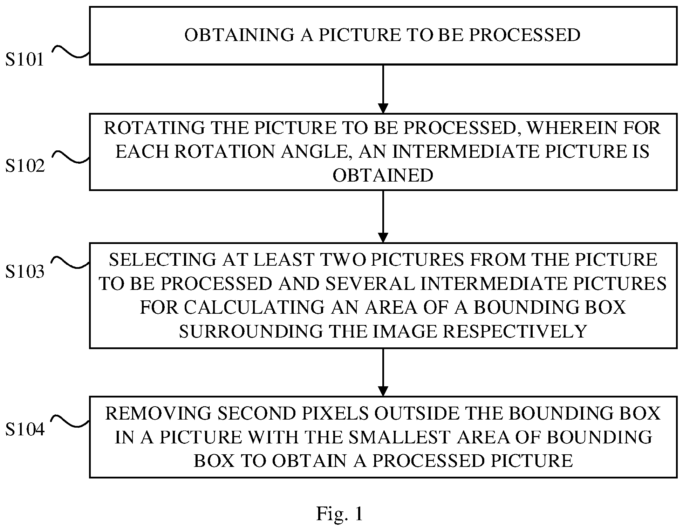

The embodiment of the present application provides a method of processing picture. Specifically, Fig. 1 is a flowchart of the method of processing picture provided by the first embodiment of the present application. As shown in Fig. 1, the method of processing picture provided in the embodiment includes the following step S101 to step S104.

Step S101: obtaining a picture to be processed.

The picture to be processed includes a plurality of pixels, and the plurality of pixels include first pixels for forming an image and second pixels for forming an image background. Each second pixel forming the image background may adopt the same gray scale, and the first pixel forming the image has a corresponding gray scale at each position according to a specific image.

Optionally, the second pixels are transparent pixels, and the first pixels are non-transparent pixels, that is, the first pixels do not have transparency, and the second pixels have a predetermined transparency. Therefore, in the processing of the pixel level, the first pixel and the second pixel can be quickly identified through the transparency of the pixel, and the speed of pixel processing is increased, thereby increasing the speed of picture processing.

Step S102: rotating the picture to be processed, where for each rotation angle, an intermediate picture is obtained.

Optionally, first, a bounding box is determined when the image in the picture to be processed is at an original angle, which is defined as an original bounding box. Then the picture is rotated with a center of the original bounding box as the rotation center, and an intermediate picture is obtained at each rotation angle. Through rotation, the angle of the image in each of the pictures to be processed and the intermediate pictures is different, and correspondingly, the bounding box area of the image in each picture is also different. The bounding box is a geometry with a size slightly larger than the image, which surrounds the whole image and has simple properties.

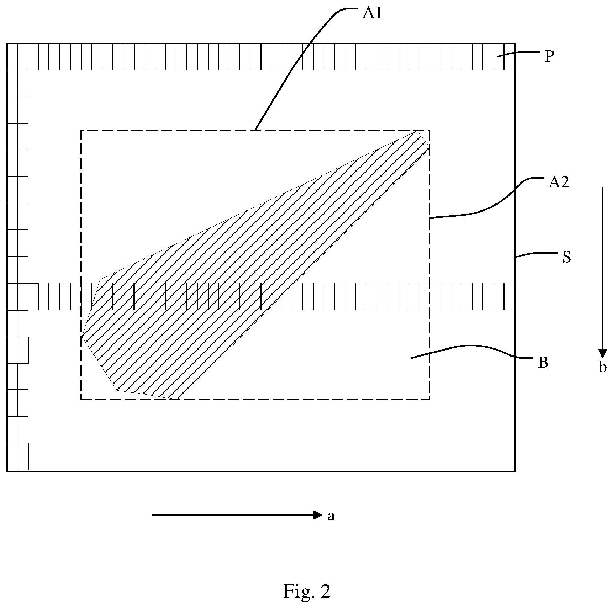

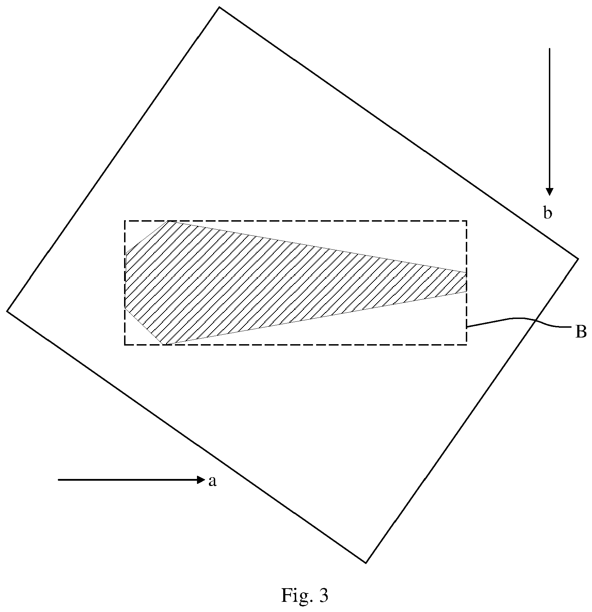

Fig. 2 is a schematic diagram of the image bounding box in a picture provided by an embodiment of the present application, and Fig. 3 is a schematic diagram of the image bounding box in another picture provided by an embodiment of the present application, as shown in Fig. 2 and Fig. 3, the pictures shown in the two figures are at different angles, the same image is at different angles, and the area of a bounding box B is different.

It should be noted that in the specific step of rotating the picture to be processed, data of the whole picture can be processed to realize the rotation of the whole picture, or the data of a partial area of the picture can be processed to realize the rotation of the partial area including the image. In addition, when the image is at different angles, the area of the corresponding bounding box is different, but the outline and angle of the bounding box are the same.

Step S103: selecting at least two pictures from the picture to be processed and several intermediate pictures for calculating an area of a bounding box surrounding the image respectively.

It should be noted that the number of the intermediate pictures is not limited in the embodiment. In the step, at least two pictures are selected from the picture to be processed and several intermediate pictures to calculate the area of the bounding box of the image.

Step S104: removing second pixels outside the bounding box in a picture with the smallest area of bounding box to obtain a processed picture.

Selecting the picture with the smallest bounding box area to remove the second pixels outside the bounding box can remove more second pixels, thereby reducing the size of the processed picture.

Using the method of processing picture provided by the embodiment, picture data obtained is pixel-level data or can be converted into pixel-level data, the pixels forming the image are the first pixels, and the pixels forming the image background are the second pixels. By rotating the picture to be processed, pictures with images at different angles can be obtained. At least two images are selected to calculate the area of the bounding box surrounding the image respectively. Finally, the second pixels outside the bounding box in the picture with a smaller area of bounding box is deleted, and more second pixels are deleted, thus, on the basis of not affecting the image expression, the size of the picture is reduced, which can improve the speed of subsequent programs to load the picture, and reduce the memory consumption needed of picture processing. In addition, when the atlas is generated, the size of the atlas can be reduced, the space utilization of the atlas can be improved, and the data loading speed of the atlas can be improved.

Optionally, in an embodiment, in the above step S102, rotating the picture to be processed at a predetermined interval angle within a predetermined angle range. In the above step S103, selecting all pictures from the picture to be processed and the several intermediate pictures, and calculating the area of the bounding box surrounding the image respectively, so that in step S104, a relatively smaller bounding box can be found among the bounding boxes of the images at various angles within the predetermined angle range to further reduce the size of the picture.

Further optionally, in an embodiment, the predetermined angle range is 0 degree to 90 degrees, and the predetermined interval angle is 1 degree, that is, in the above step S102, the picture to be processed is rotated every 1 degree from 0 to 90 degrees to get an intermediate picture, and a total of 89 intermediate pictures are obtained. In the above step S103, the area of the bounding box of the picture to be processed and the 89 intermediate pictures are calculated respectively. Thus, in step S104, the smallest bounding box can be found among the bounding boxes of the 90-angle images, that is, 90 bounding boxes, so as to further reduce the size of the picture. Between 0 degree and 90 degrees, the area of the bounding box when the image is at θ degrees is equal to the area of the bounding box when the image is at 90 * N+ θ degrees, where N = 1, 2 or 3. Therefore, the smallest bounding box can be found in the above 90 bounding boxes, that is, the smallest bounding box can be found in the 360 degrees rotating space. Therefore, setting the predetermined angle range from 0 degree to 90 degrees and determining the minimum bounding box between 0 degree and 90 degrees can avoid redundant calculation and reduce the amount of data calculation. Setting the predetermined interval angle to 1 degree can balance between the number of intermediate pictures and the accuracy of data.

Optionally, in an embodiment, please continue to refer to Fig. 2, Fig. 2 shows a picture S to be processed, which includes a plurality of pixels P, and coordinates of each of the pixels P in a first direction a are first coordinates x, and coordinates in a second direction b are second coordinates y. The first direction a is perpendicular to the second direction b, that is, each of the pixels P is arranged in the first direction a and the second direction b respectively to form a pixel array. In the picture S to be processed, the bounding box B of the image includes two first edges A1 extending in the first direction a and two second edges A2 extending in the second direction b. It should be noted that Fig. 2 only shows the outline of some pixels, and the edge of the image is also simplified as a straight line at the same time. In fact, at pixel level, the edge of the image should be serrated.

Using the method of processing picture provided in the embodiment, the bounding box is set to be a rectangle, the graph is simple, and the amount of geometric calculation in the data processing process is small. At the same time, the extension direction of the frame of the bounding box is consistent with the pixel arrangement direction, so that when the second pixels outside the bounding box is deleted, the amount of deletion can be increased to reduce the image size as much as possible.

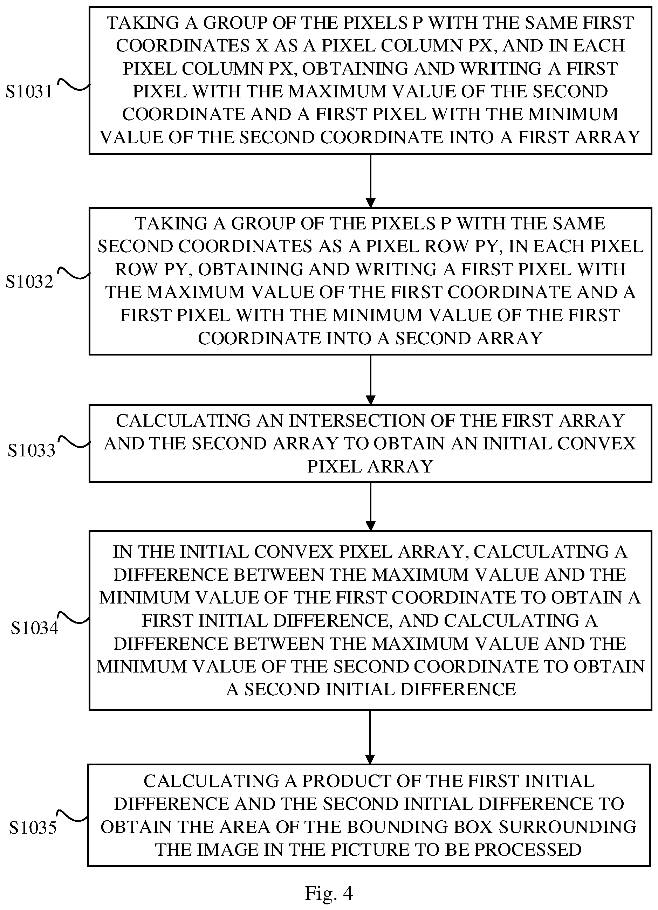

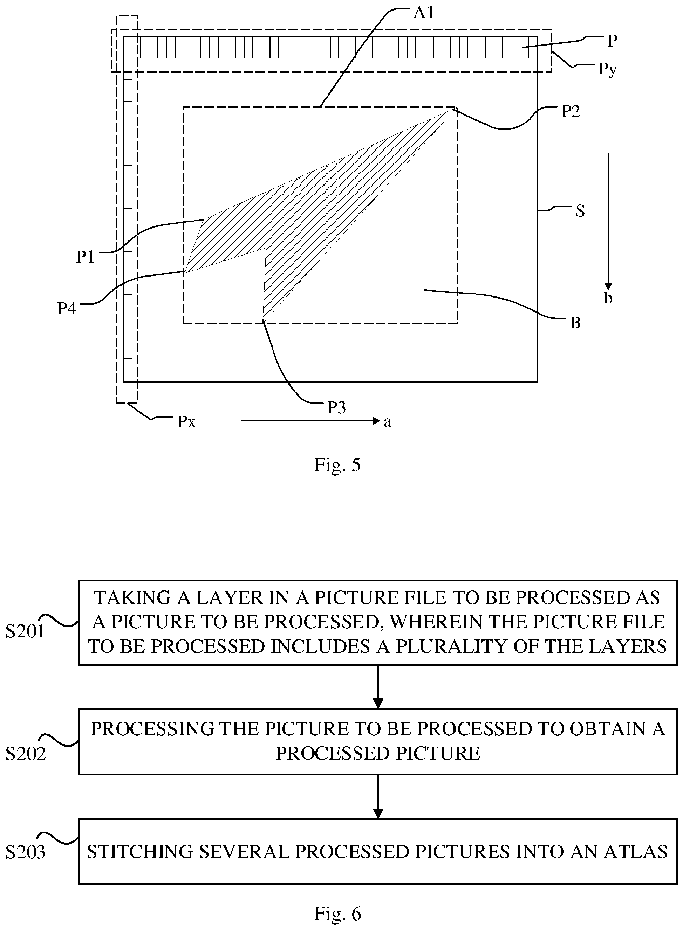

Optionally, in an embodiment, Fig. 4 is a schematic diagram of the steps of calculating the area of the bounding box surrounding the image on the picture to be processed in the method of processing picture provided by the first embodiment of the present application. Fig. 5 is a schematic diagram of calculating the area of the bounding box provided by the first embodiment of the present application. As shown in Figures 4 and 5, in step S103, the step of calculating the area of the bounding box surrounding the image in the picture to be processed specifically includes the following steps S1031 to S1035. The following steps are all steps for the picture to be processed, specifically:
Step S1031, taking a group of the pixels P with the same first coordinates x as a pixel column Px, and in each pixel column Px, obtaining and writing a first pixel with the maximum value of the second coordinate and a first pixel with the minimum value of the second coordinate into a first array.
Step S1032, taking a group of the pixels P with the same second coordinates as a pixel row Py, in each pixel row Py, obtaining and writing a first pixel with the maximum value of the first coordinate and a first pixel with the minimum value of the first coordinate into a second array.

Specifically, for the above steps S1031 and S1032, in an embodiment, the picture to be processed can be scanned from left to right in the first direction, and for each pixel column, the top and bottom non-transparent pixels are found and stored in the first array. And the picture to be processed can be scanned from top to bottom in the second direction, for each pixel row, the leftmost and rightmost non-transparent pixels are found and stored in the second array.

Step S1033, calculating an intersection of the first array and the second array to obtain an initial convex pixel array.

Through the above two steps, the pixels in the first array and the second array obtained constitute the edges of the image. The intersection of the first array and the second array is calculated, and the pixels obtained are vertexes at the edge of the image, and the present application names the intersection as the initial convex pixel array.

As shown in Fig. 5, the pixels included in the initial convex pixel array are pixel P1, pixel P2, pixel P3, pixel P4. It should be noted that Fig. 5 only schematically shows an initial convex pixel array corresponding to an image, and does not constitute a limitation on the image in the present application.

Step S1034: in the initial convex pixel array, calculating a difference between the maximum value of the first coordinate and the minimum value of the first coordinate to obtain a first initial difference, and calculating a difference between the maximum value of the second coordinate and the minimum value of the second coordinate to obtain a second initial difference.

Step S1035: calculating a product of the first initial difference and the second initial difference to obtain the area of the bounding box surrounding the image in the picture to be processed.

Please continue to refer to Figure 5, in the initial convex pixel array, the maximum value of the first coordinate is the first coordinate x2 of the pixel P2, the minimum value of the first coordinate is the first coordinate x4 of the pixel P4, the maximum value of the second coordinate is the second coordinate y3 of the pixel P3, and the minimum value of the second coordinate is the second coordinate y2 of the pixel P2, then the product obtained by (x2-x4)*(y3-y2) is the area if the bounding box B.

Optionally, in an embodiment, in step S102, the rotating the picture to be processed, specifically includes the following steps: determining a center of the bounding box of the image in the picture to be processed to obtain an initial center point O; rotating coordinates of each pixel in the initial convex pixel array around the initial center point O to obtain an intermediate convex pixel array.

In the method of processing picture provided in the embodiment, the rotation of the processed picture is simplified to the rotation of the convex pixel array, which reduces the amount of data processing.

Optionally, in an embodiment, in step S103, the step of calculating the area of the bounding box surrounding the image in the intermediate picture includes: in the intermediate convex pixel array, calculating a difference between the maximum value of the first coordinate and the minimum value of the first coordinate to obtain a first intermediate difference, and calculating a difference between the maximum value of the second coordinate and the minimum value of the second coordinate to obtain a second intermediate difference; calculating a product of the first intermediate difference and the second intermediate difference to obtain the area of the bounding box surrounding the image in the intermediate picture.

Compared with directly obtaining the vertexes of the image in the intermediate picture for calculation, in the method of processing picture provided in the embodiment, the area of the bounding box surrounding the image in the intermediate picture is calculated based on the above-mentioned intermediate convex pixel array, the calculation complexity is simplified and the amount of data processing is reduced.

Optionally, in an embodiment, in step S101, the step of obtaining a picture to be processed, includes: obtaining a picture file in PhotoShop Document (PSD) format. The picture file in the PSD format is an image format file of Photoshop itself, and is a design file of Photoshop. Obtaining a layer in the picture file to obtain the picture to be processed; removing the second pixels outside the bounding box in a picture with the smallest area of bounding box to obtain a processed picture, after the processed picture is obtained, the method of processing picture further includes: storing the processed picture in Portable Network Graphics (PNG) format, where PNG is a bit image format with lossless compression.

Using the method of processing picture provided in the embodiment, the picture to be processed is a layer derived from the PSD format, and finally the processed picture is stored in the PNG format to facilitate subsequent calls of other picture processing tools.

The above is the embodiment of the method of processing picture provided by the embodiment of the present application. The method of processing atlas provided by the present application includes the above-mentioned method of processing picture. Therefore, in the following description of the method of processing atlas provided by the present application, the description of the above method of processing picture is relatively brief, and the specific technical features and corresponding technical effects can be referred to the above.

### Embodiment 2

An embodiment of the present application provides a method of processing atlas. Specifically, Fig. 6 is a flowchart of a method of processing atlas provided in a second embodiment of the present application. As shown in Fig. 6, the method of processing atlas provided in the embodiment includes the following steps S201 to S203.

Step S201: taking a layer in a picture file to be processed as a picture to be processed, the picture file to be processed includes a plurality of the layers.

In the step, the obtained picture file in the PSD format is a file stream of the picture file, and the specific method for reading the file stream can be an existing reading method in the prior art.

Step S202: processing the picture to be processed to obtain a processed picture.

The step can be specifically processed by any one of the methods of processing picture provided by the present application, referring to the above for details.

Step S203: stitching several processed pictures into an atlas.

Using the method of processing atlas provided in the embodiment, the picture file in PSD format can be processed into atlas. During the processing, each layer in the picture file is processed as a picture to be processed, and a smaller picture is obtained after processing, then it is stitched into an atlas, so that the resulting atlas formed is also smaller, and more pictures can be set in the same size atlas, which improves the space utilization of the atlas and reduces the memory occupied by subsequent programs in the process of processing the atlas. In addition, the present application directly reads the file stream of the picture file to be processed, and takes each layer of the picture file to be processed as a separate picture. The picture can be cropped at the pixel level, and compared with the prior art drawing an image after reading the data, hides all layer attributes, and directly divides the whole image, the overall processing speed is faster.

In an embodiment, the following Table 1 shows a time-consuming comparison between using the JSX plug-in of Photoshop in the prior art and using the embodiment of the present application to crop a PSD format picture file into images and put them together into an atlas:

**Table 1 time-consuming comparison table of the prior art and the present application**

| | time consumed of JSX plug-in | time consumed of the embodiment of the present application |
|---|---|---|
| 48 layers, 2000*2000 | 48 seconds | 8 seconds |
| 48 layers, 4000*4000 | 108 seconds | 18 seconds |
| 39 layers, 500*400 | 28 seconds | 0.2 seconds |
| 36layers, 1337*752 | 47 seconds | 0.9 seconds |

As shown in Table 1 above, for 48 layers, the file in the PSD format with size of 2000 * 2000, it takes 48 seconds for the JSX plug-in to read data, draw images, and then process them into atlas; and it takes 8 seconds for the embodiment of the application to read the file stream and process the images into the atlas. For 48 layers, a file image in the PSD format with the size of 4000 * 4000, it takes 108 seconds for the JSX plug-in to read the data, draw the images, and then process the images into the atlas, and it takes 18 seconds for the embodiment of the application to read the file stream and process the images into the atlas. For 39 layers, the picture file in the PSD format with the size of 500 * 400, it takes 28 seconds for the JSX plug-in to read the data, draw the images, and then process the images into the atlas, and it takes 0.2 seconds for the embodiment of the application to read the file stream and process the images into the atlas. For 36 layers, the image file of PSD format with the size of 1337 * 752, it takes 47 seconds for the JSX plug to read the data, draw the images, and then process the images into the atlas, and it takes 0.9 seconds for the embodiment of the application to read the file stream and process the images into the atlas. It can be seen that compared with the prior art, the overall processing speed of the method of processing atlas provided by the embodiment of the application is faster.

Optionally, in an embodiment, the method of processing atlas further includes: generating an atlas mapper info file. The atlas mapper info file includes a name of the processed picture, a relative rotation angle between the processed picture and the corresponding picture to be processed, and coordinates of a center point of the processed picture, a width of the processed picture, and a height of the processed picture.

Using the method of processing atlas provided in the embodiment, the atlas mapper info file is generated after the atlas is formed. For example, the atlas mapper info file is in the JSON format, and in the subsequent processing of the atlas, relevant parameters can be obtained by parsing the atlas mapper info file for further processing.

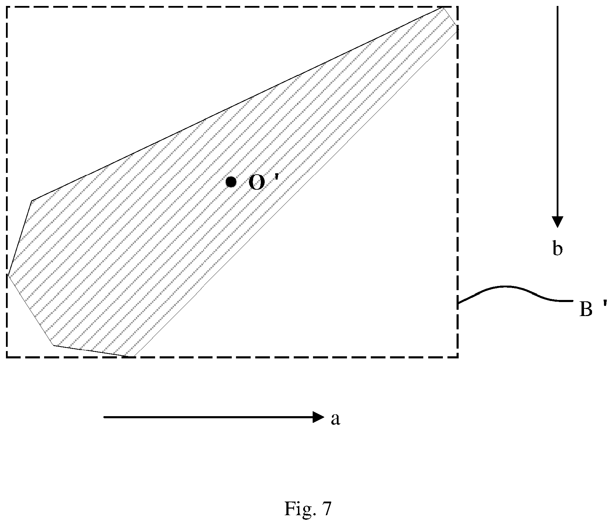

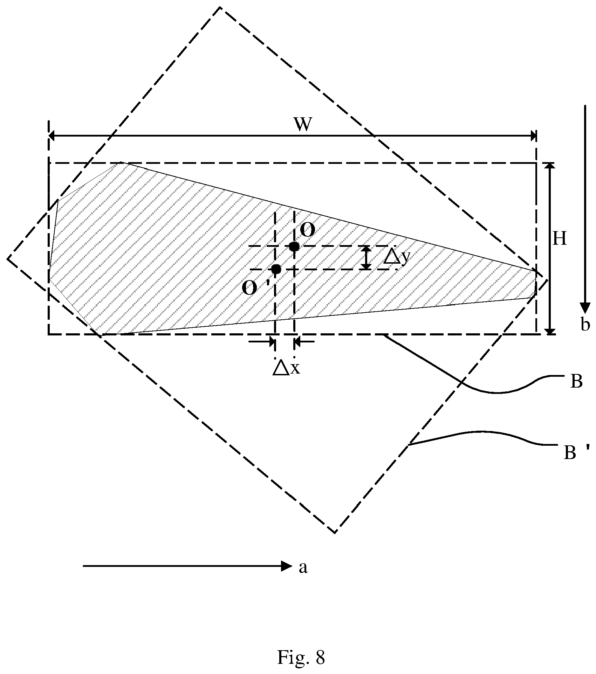

Fig. 7 is a schematic diagram of a picture to be processed provided by an embodiment of the present application, and Fig. 8 is a schematic diagram of an intermediate picture provided by an embodiment of the present application. Optionally, in an embodiment, as shown in Fig. 7, in the picture to be processed, a bounding box B' has a center point O', and after the bounding box B' is rotated around the center point O', the intermediate picture is obtained as shown in the Fig. 8. In the intermediate picture shown in Fig. 8, the center point O (xₒ, yₒ) of the new bounding box B has a certain offset from the original center point O'. The offset in the first direction a is defined as Δx, the offset in the second direction b is defined as Δy. If the intermediate picture shown in Fig. 8 is the picture when the bounding box of the image is the smallest, therefore, the coordinates O (xₒ, yₒ) of the center point of the processed picture is calculated using the following formula: ${x}_{o} = \frac{{x}_{max} + {x}_{min}}{2} + Δ x$ ${y}_{o} = \frac{{y}_{max} + {y}_{min}}{2} + Δ y$
a width W of the processed picture is calculated by the following formula: $W = {x}_{max} - {x}_{min}$
a height H of the processed picture is calculated by the following formula: $H = {y}_{max} - {y}_{min}$
where *xₘₐₓ* is the maximum value of first coordinates of pixels in the processed picture, *xₘᵢₙ* is the minimum value of the first coordinates of the pixels in the processed picture, and *yₘₐₓ* is the maximum value of second coordinates of the pixels in the processed picture, *yₘᵢₙ* is the minimum value of the second coordinates of the pixels in the processed picture, Δx is an offset of the center point O (xₒ, yₒ) of the processed picture relative to an initial center point O' of the picture to be processed in a first direction a, Δy is an offset b of the center point O (xₒ, yₒ) of the processed picture relative to the initial center point of the picture to be processed in a second direction, where the first coordinates are coordinates in the first direction a, and the second coordinates are coordinates in the second direction b.

Optionally, in an embodiment, the step of generating an atlas mapper info file, includes: writing a layer name corresponding to the processed picture into a name of the processed picture; writing the layer name and a layer serial number into the name of the processed picture in accordance with a determination that layer names corresponding to two or more of the processed pictures are the same, where the layer name and the layer serial number correspond to the processed pictures.

Using the method of processing atlas provided by the embodiment, the name of the corresponding layer is reflected in the name of the processed picture, so as to improve the readability of the data in subsequent processing process. At the same time, when different layers use the same name, the layer serial number is further introduced into the name of the processed picture, so as to avoid confusion in the name of the processed picture.

Optionally, in an embodiment, in step S201, when a layer in the picture file in PSD format is taken as the picture to be processed, the attributes of the layer is determined. A layer in the image file in PSD format is taken as a picture to be processed in accordance with a determination that the layer is not a text layer, a background layer or a hidden layer. When the layer is the text layer, the background layer or the hidden layer, the text layer, the background layer or the hidden layer are not processed.

The method of processing atlas provided by the embodiment does not process the text layer, the background layer or the hidden layer, which reduces the amount of data processing without causing image data loss.

### Embodiment 3

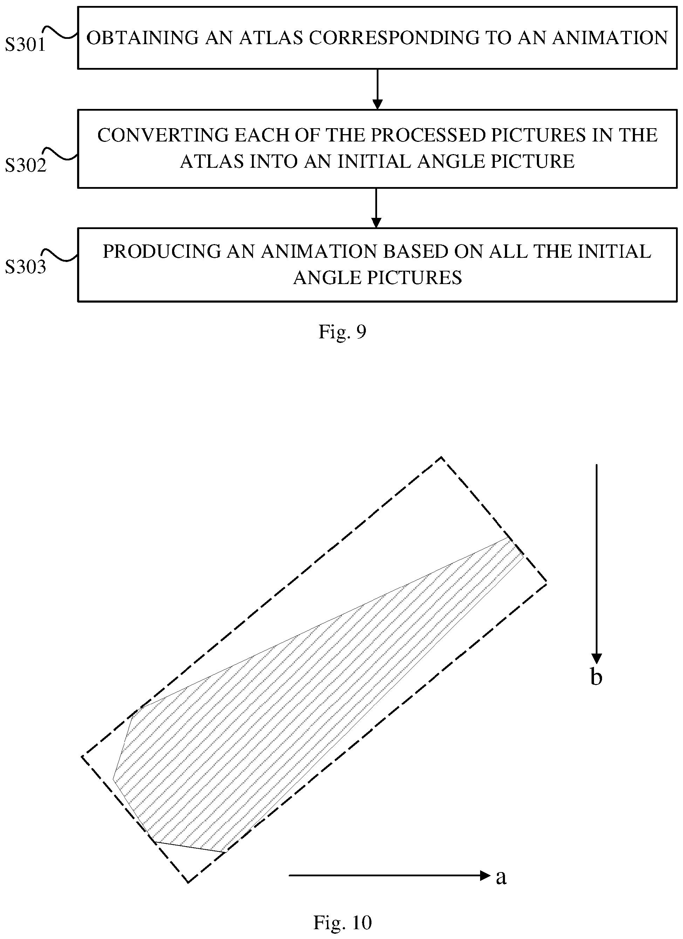

The embodiment of the present application provides a method of producing animation. Specifically, Fig. 9 is a flowchart of the method of producing animation provided by a third embodiment of the present application. As shown in Fig. 9, the method of producing animation provided in the embodiment includes the following steps S301 to S303.

Step S301: obtaining an atlas corresponding to an animation;
The atlas can be obtained by any of the method of processing atlas provided by the present application, please refer to the above for details.

Step S302: converting each of the processed pictures in the atlas into an initial angle picture.

The initial angle picture is a picture formed by setting the processed picture at an angle of the picture to be processed.

Step S303: producing an animation based on all the initial angle pictures.

Using the method of producing animation provided by the embodiment, and using the atlas processed by the method of processing atlas provided by the present application, when the atlas is being animated, each picture in the atlas is now converted into an initial angle picture, so that the image in the picture is consistent with the initial angle. On the one hand, because the atlas occupies a small memory, the device memory is reduced during the animation production process, on the other hand, before making the animation, the image is ensured at the original angle, and there is no need for users to adjust the angle of the image, so as to improve user experience.

Optionally, in an embodiment, in step S302, when each of the processed pictures in the atlas is converted into an initial angle picture, a center point and an angle parameter of the processed picture is obtained, the center point and the angle parameter can be obtained from the atlas mapper info file of the processed picture. The angle parameter is a relative rotation angle between the processed picture and the corresponding picture to be processed. Then the processed picture is rotated around the center point of the processed picture according to the angle parameter. As shown in Fig. 10, Fig. 10 is a schematic diagram of an initial angle image provided by an embodiment of the present application. Compared Fig. 7 with Fig. 10, the angle of the image is the same.

### Embodiment 4

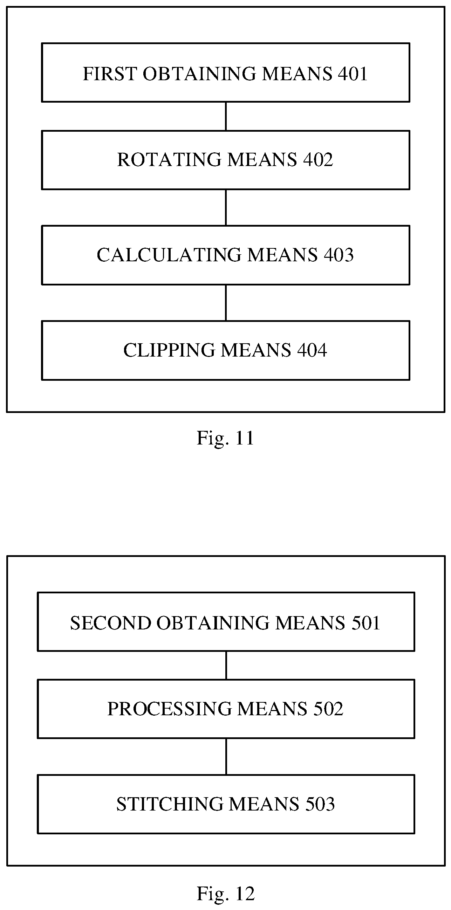

Corresponding to the first embodiment above, a fourth embodiment of the present application provides an apparatus of processing picture. Fig. 11 is a block diagram of the apparatus of processing picture provided in the fourth embodiment of the present application. As shown in Fig. 11, the apparatus includes: a first obtaining means 401, a rotating means 402, a calculating means 403, and a clipping means 404.

The first obtaining means 401 is for obtaining a picture to be processed, where the picture to be processed includes a plurality of pixels, and the plurality of pixels include first pixels for forming an image and second pixels for forming an image background. In the rotating means 402 for rotating the picture to be processed, for each rotation angle, an intermediate picture is obtained. The calculating means 403 is for selecting at least two pictures from the picture to be processed and several intermediate pictures for calculating an area of a bounding box surrounding the image respectively. The clipping means 404 is for removing second pixels outside the bounding box in a picture with the smallest area of bounding box to obtain a processed picture.

Optionally, the specific steps performed by the rotating means 402 include: rotating the picture to be processed at a predetermined interval angle within a predetermined angle range. The specific steps performed by the calculating means 403 include: selecting all pictures from the picture to be processed and the several intermediate pictures for calculating the area of the bounding box surrounding the image respectively.

Optionally, coordinates of the pixels in a first direction are first coordinates, and coordinates in a second direction are second coordinates, where the first direction is perpendicular to the second direction, and in the picture to be processed, the bounding box includes two first edges extending in the first direction and two second edges extending in the second direction.

Optionally, when the calculating means 403 calculates the area of the bounding box surrounding the image in the picture to be processed, the steps performed include: for the picture to be processed, taking a group of the pixels with the same first coordinates as a pixel column, and in each pixel column, obtaining and writing a first pixel with the maximum value of the second coordinate and a first pixel with the minimum value of the second coordinate into a first array; taking a group of the pixels with the same second coordinates as a pixel row, in each pixel row, obtaining and writing a first pixel with the maximum value of the first coordinate and a first pixel with the minimum value of the first coordinate into a second array; calculating an intersection of the first array and the second array to obtain an initial convex pixel array; in the initial convex pixel array, calculating a difference between the maximum value of the first coordinate and the minimum value of the first coordinate to obtain a first initial difference, and calculating a difference between the maximum value of the second coordinate and the minimum value of the second coordinate to obtain a second initial difference; calculating a product of the first initial difference and the second initial difference to obtain the area of the bounding box surrounding the image in the picture to be processed.

Optionally, the specific steps performed by the rotating means 402 include: determining a center of the bounding box of the image in the picture to be processed to obtain an initial center point; rotating coordinates of each pixel in the initial convex pixel array around the initial center point to obtain an intermediate convex pixel array.

Optionally, when the calculation means 403 calculates the area of the bounding box surrounding the image in the intermediate picture, the steps performed include: in the intermediate convex pixel array, calculating a difference between the maximum value of the first coordinate and the minimum value of the first coordinate to obtain a first intermediate difference, and calculating a difference between the maximum value of the second coordinate and the minimum value of the second coordinate to obtain a second intermediate difference; calculating a product of the first intermediate difference and the second intermediate difference to obtain the area of the bounding box surrounding the image in the intermediate picture.

Optionally, the predetermined angle range is 0 degree to 90 degrees, and the predetermined interval angle is 1 degree.

Optionally, the second pixels are transparent pixels, and the first pixels are non-transparent pixels.

Optionally, the steps performed by the first obtaining means 401 include: obtaining a picture file in PSD format; and obtaining a layer in the picture file to obtain the picture to be processed. The device further includes a storing means, storing the processed picture in PNG format.

### Embodiment 5

Corresponding to the second embodiment above, a fifth embodiment of the present application provides an apparatus of processing atlas. Fig. 12 is a block diagram of the apparatus of processing atlas provided in the fifth embodiment of the present application. As shown in Fig. 12, the apparatus includes: a second obtaining means 501, a processing means 502, and a stitching means 503.

The second obtaining means 501 is for taking a layer in a picture file to be processed as a picture to be processed, where the picture file to be processed includes a plurality of the layers. The processing means 502 is for processing the picture to be processed to obtain a processed picture, where the processed picture corresponds to the picture to be processed. Specifically, any method of processing picture provided by the present application can be used for processing, or the processing means 502 includes any apparatus of processing picture provided by the present application. The stitching means 503 for stitching several of the processed pictures into an atlas.

Optionally, the atlas processing device further includes: a generating means, generating an atlas mapper info file. The atlas mapper info file includes a name of the processed picture, a relative rotation angle between the processed picture and the corresponding picture to be processed, and coordinates of a center point of the processed picture, a width of the processed picture, and a height of the processed picture.

Optionally, the coordinate O (xₒ, yₒ) of the center point of the processed picture is calculated by the following formula: ${x}_{o} = \frac{{x}_{max} + {x}_{min}}{2} + Δ x$ ${y}_{o} = \frac{{y}_{max} + {y}_{min}}{2} + Δ y$
a width W of the processed picture is calculated by the following formula: $W = {x}_{max} - {x}_{min}$
a height H of the processed picture is calculated by the following formula: $H = {y}_{max} - {y}_{min}$
wherein, *xₘₐₓ* is the maximum value of first coordinates of pixels in the processed picture, *xₘᵢₙ* is the minimum value of the first coordinates of the pixels in the processed picture, and *yₘₐₓ* is the maximum value of second coordinates of the pixels in the processed picture, *yₘᵢₙ* is the minimum value of the second coordinates of the pixels in the processed picture, Δx is an offset of the center point of the processed picture relative to an initial center point of the picture to be processed in a first direction, Δy is an offset of the center point of the processed picture relative to the initial center point of the picture to be processed in a second direction, the first coordinates are coordinates in the first direction, and the second coordinates are coordinates in the second direction.

Optionally, the specific steps performed by the generating means includes: writing a layer name corresponding to the processed picture into a name of the processed picture; writing the layer name and a layer serial number into the name of the processed picture, in accordance with a determination that layer names corresponding to two or more of the processed pictures are the same, where the layer name and the layer serial number correspond to the processed pictures.

Optionally, the specific steps performed by the second obtaining means includes: in accordance with a determination that the layer is not a text layer, a background layer or a hidden layer, taking a layer in the picture file in the PSD format as a picture to be processed.

### Embodiment 6

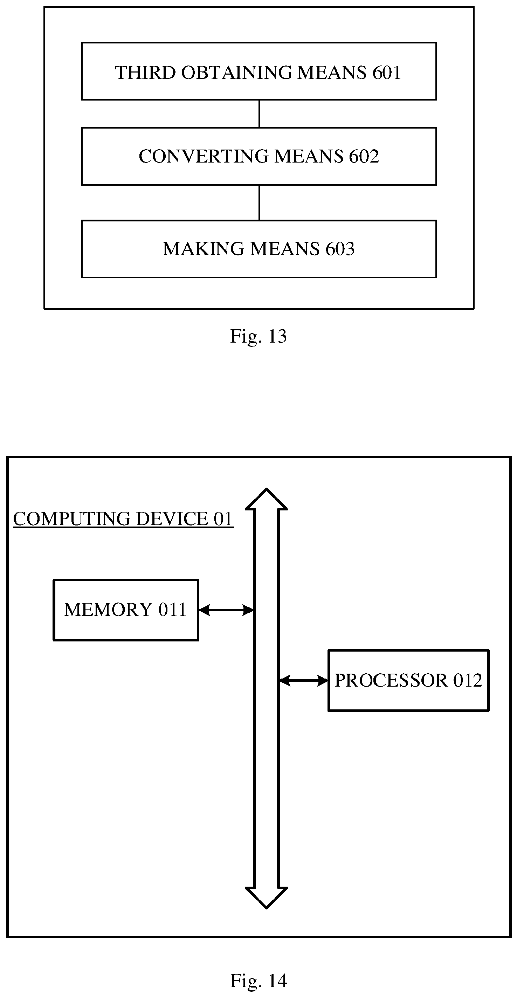

Corresponding to the third embodiment above, a sixth embodiment of the present application provides an apparatus of producing animation. Fig. 13 is a block diagram of the apparatus of producing animation provided in the sixth embodiment of the present application. As shown in Fig. 13, the apparatus includes: a third obtaining means 601, a converting means 602, and a making means 603.

The third obtaining means 601 is for obtaining an atlas corresponding to an animation, the atlas can be obtained by using any method of processing atlas provided by the present application, or the atlas can be obtained by using any apparatus of processing atlas provided by the present application. The converting means 602 is for converting each of the processed pictures in the atlas into an initial angle picture, where the initial angle picture is a picture formed by setting the processed picture at an angle of the picture to be processed. The making means 603 is for producing an animation based on all the initial angle pictures.

Optionally, the specific steps performed by the converting means 602 includes: obtaining a center point and an angle parameter of the processed picture, where the angle parameter is a relative rotation angle between the processed picture and the corresponding picture to be processed; and rotating the processed picture around the center point of the processed picture according to the angle parameter.

### Embodiment 7

The embodiment also provides a computing device, such as a smart phone, a tablet computer, a notebook computer, a desktop computer, a rack type server, a blade type server, a tower type server or a cabinet type server (including an independent server or a server cluster composed of a plurality of servers) that can execute programs. As shown in Fig. 14, the computing device 01 of the embodiment includes, but is not limited to, a memory 011, a processor 012, as shown in Fig. 14. It should be noted that Fig. 14 shows only a computing device 01 having components as a memory 011 and a processor 012, but it is understood that it is not required to implement all of the shown components and that more or fewer parts can be implemented in lieu thereof.

In an embodiment, the memory 011 (that is, readable storage medium) includes a flash memory, a hard disk, a multimedia card, a card type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only Memory (PROM), a magnetic memory, a magnetic disk, an optical disk, etc. In some embodiments, the memory 011 may be an internal storage module of the computing device 01 such as a hard disk or memory of the computing device 01. In other embodiments, the memory 011 may also be an external storage device of the computing device 01, such as a plugged hard disk provided on the computing device 01, a Smart Media Card (SMC), Secure Digital (SD) card, a Flash Card, and the like. Of course, the memory 011 may also include both an internal storage module and an external storage device of the computing device 01. In the embodiment, the memory 011 is generally used to store an operating system and various types of application software installed in the computing device 01 such as computer-readable instructions of the method of processing picture, the method of processing atlas, the method of producing animation and the like. In addition, the memory 011 may also be used to temporarily store various types of data that have been or will be outputted.

The processor 012, in some embodiments, may be a Central Processing Unit (CPU), a controller, a microprocessor, or other data processing chip. The processor 012 is generally used to control the overall operation of the computing device 01. In the embodiment, the processor 012 is used to run computer-readable instructions stored in the memory 011 or process data, such as a method of processing picture, a method of processing atlas and a method of producing animation.

### Embodiment 8

The embodiment further provides a computer-readable storage medium, such as, a flash memory, a hard disk, a multimedia card, a card type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only Memory (PROM), a magnetic memory, a magnetic disk, an optical disk, servers, App application malls, etc. which stores computer programs, and when the computer programs are executed by a processor, corresponding functions are realized. The computer-readable storage medium of the embodiment is used to store the method of processing picture, the method of processing atlas or the method of producing animation, and when executed by the processor, the method of processing picture, the method of processing atlas or the method of producing animation provided by the above embodiments are implemented.

It should be noted that in this article, the terms "include", "contain" or any other variants thereof are intended to cover non-exclusive inclusion, so that a process, method, article or device including a series of elements not only includes those elements, or also includes other elements not explicitly listed, or elements inherent to the process, method, article, or device. Without more restrictions, the element defined by the sentence "including a..." does not exclude the existence of other identical elements in the process, method, article or device that includes the element.

Through the description of the above embodiments, those skilled in the art can clearly understand that the methods of the above embodiments can be implemented by means of software and a necessary general hardware platform. Of course, hardware can also be used, but in many cases the former is a better implementation.

## Claims

1. A computer-implemented method of processing picture, comprising:
obtaining (S101) a picture to be processed, wherein the picture to be processed comprises a plurality of pixels, and the plurality of pixels comprise first pixels for forming an image and second pixels for forming an image background;
rotating (S102) the picture to be processed, wherein for each rotation angle, an intermediate picture is obtained;
selecting (S103) at least two pictures from the picture to be processed and several intermediate pictures for calculating an area of a bounding box surrounding the image respectively; and
removing (S104) second pixels outside the bounding box in a picture with the smallest area of bounding box to obtain a processed picture,
wherein coordinates of the pixels in a first direction are first coordinates, and coordinates in a second direction are second coordinates, wherein the first direction is perpendicular to the second direction, and wherein in the picture to be processed, the bounding box comprises two first edges extending in the first direction and two second edges extending in the second direction.
wherein the calculating the area of the bounding box surrounding the image in the picture to be processed comprises:
for the picture to be processed, taking (S1031) a group of the pixels with the same first coordinates as a pixel column, and in each pixel column, obtaining a bottom first pixel of the first pixels with the maximum value of the second coordinate and a top first pixel of the first pixels with the minimum value of the second coordinate and writing the bottom first pixel and the top first pixel for each pixel column into a first array;
taking (S1032) a group of the pixels with the same second coordinates as a pixel row, and in each pixel row, obtaining a rightmost first pixel of the first pixels with the maximum value of the first coordinate and a leftmost first pixel of the first pixels with the minimum value of the first coordinate and writing the rightmost first pixel and the leftmost first pixel of each pixel row into a second array;
calculating (S1033) an intersection of the first array and the second array to obtain an initial convex pixel array;
in the initial convex pixel array, calculating (S1034) a difference between the maximum value of the first coordinate and the minimum value of the first coordinate to obtain a first initial difference, and calculating a difference between the maximum value of the second coordinate and the minimum value of the second coordinate to obtain a second initial difference; and
calculating (S1035) a product of the first initial difference and the second initial difference to obtain the area of the bounding box surrounding the image in the picture to be processed.

2. The method of processing picture according to claim 1, wherein the rotating the picture to be processed comprises rotating the picture to be processed at a predetermined interval angle within a predetermined angle range, and
wherein the selecting at least two pictures from the picture to be processed and several intermediate pictures for calculating an area of a bounding box surrounding the image respectively comprises selecting all pictures from the picture to be processed and the several intermediate pictures for calculating the area of the bounding box surrounding the image respectively.

3. The method of processing picture according to any of the preceding claims, wherein the rotating the picture to be processed comprises:
determining a center of the bounding box of the image in the picture to be processed to obtain an initial center point; and
rotating coordinates of each pixel in the initial convex pixel array around the initial center point to obtain an intermediate convex pixel array.

4. The method of processing picture according to claim 3, wherein the calculating the area of the bounding box surrounding the image in the intermediate picture comprises:
in the intermediate convex pixel array, calculating a difference between the maximum value of the first coordinate and the minimum value of the first coordinate to obtain a first intermediate difference, and calculating a difference between the maximum value of the second coordinate and the minimum value of the second coordinate to obtain a second intermediate difference; and
calculating a product of the first intermediate difference and the second intermediate difference to obtain the area of the bounding box surrounding the image in the intermediate picture.

5. The method of processing picture according to claim 2, wherein the predetermined angle range is 0 degree to 90 degrees, and the predetermined interval angle is 1 degree.

6. The method of processing picture according to any one of the preceding claims, wherein the second pixels are transparent pixels, and the first pixels are non-transparent pixels.

7. The method of processing picture according to any one of the preceding claims, wherein the obtaining a picture to be processed comprises:
obtaining a picture file in PhotoShop Document, PSD, format; and
obtaining a layer in the picture file to obtain the picture to be processed, and
wherein, after removing the second pixels outside the bounding box in the picture with the smallest area of bounding box to obtain the processed picture, the method of processing picture further comprises: storing the processed picture in Portable Network Graphics, PNG, format.

8. A method of processing atlas, comprising the method of processing picture according to any one of the preceding claims, wherein the obtaining a picture to be processed comprises:
taking (S201) a layer in a picture file to be processed as a picture to be processed, wherein the picture file to be processed comprises a plurality of layers, and
wherein the method further comprises: stitching (S203) several processed pictures into an atlas.

9. A method of producing animation, comprising the method of processing picture according to claim 8, the method further comprising:
obtaining (S301) the atlas.

10. An apparatus of processing picture, comprising:
a first obtaining means (401) for obtaining a picture to be processed, wherein the picture to be processed comprises a plurality of pixels, and the plurality of pixels comprise first pixels for forming an image and second pixels for forming an image background;
a rotating means (402) for rotating the picture to be processed, wherein for each rotation angle, an intermediate picture is obtained;
a calculating means (403) for selecting at least two pictures from the picture to be processed and several intermediate pictures for calculating an area of a bounding box surrounding the image respectively; and
a clipping means (404) for removing second pixels outside the bounding box in a picture with the smallest area of bounding box to obtain a processed picture.
wherein coordinates of the pixels in a first direction are first coordinates, and coordinates in a second direction are second coordinates, wherein the first direction is perpendicular to the second direction, and wherein in the picture to be processed, the bounding box comprises two first edges extending in the first direction and two second edges extending in the second direction.
wherein the calculating the area of the bounding box surrounding the image in the picture to be processed comprises:
for the picture to be processed, taking (S1031) a group of the pixels with the same first coordinates as a pixel column, and in each pixel column, obtaining a bottom first pixel of the first pixels with the maximum value of the second coordinate and a top first pixel of the first pixels with the minimum value of the second coordinate and writing the bottom first pixel and the top first pixel for each pixel column into a first array;
taking (S1032) a group of the pixels with the same second coordinates as a pixel row, and in each pixel row, obtaining a rightmost first pixel of the first pixels with the maximum value of the first coordinate and a leftmost first pixel of the first pixels with the minimum value of the first coordinate and writing the rightmost first pixel and the leftmost first pixel of each pixel row into a second array;
calculating (S1033) an intersection of the first array and the second array to obtain an initial convex pixel array;
in the initial convex pixel array, calculating (S1034) a difference between the maximum value of the first coordinate and the minimum value of the first coordinate to obtain a first initial difference, and calculating a difference between the maximum value of the second coordinate and the minimum value of the second coordinate to obtain a second initial difference; and
calculating (S1035) a product of the first initial difference and the second initial difference to obtain the area of the bounding box surrounding the image in the picture to be processed.

11. The apparatus of processing picture according to claim 10, wherein the means comprises:
at least one processor (012); and
at least one memory (011) comprising computer program code, the at least one memory and computer program code configured to, with the at least one processor (012), cause the performance of the apparatus.

12. A computer-readable storage medium having computer program instructions stored thereon, wherein the computer program instructions, when executed by a processor, cause the processor to perform the method according to any one of claims 1 to 9.

13. A computer program product comprising computer program instructions, wherein the computer program instructions, when executed by a processor, cause the processor to perform the method according to any one of claims 1 to 9.

## Patentansprüche

1. Ein computerimplementiertes Verfahren zur Bildverarbeitung, das folgende Schritte aufweist:
Erhalten (S101) eines zu verarbeitenden Bildes, wobei das zu verarbeitende Bild eine Mehrzahl von Pixeln aufweist und die Mehrzahl von Pixeln erste Pixel zum Bilden einer Abbildung und zweite Pixel zum Bilden eines Abbildungshintergrunds aufweist;
Drehen (S102) des zu verarbeitenden Bildes, wobei für jeden Drehwinkel ein Zwischenbild erhalten wird;
Auswählen (S103) von zumindest zwei Bildern aus dem zu verarbeitenden Bild und mehreren Zwischenbildern zum Berechnen eines Bereichs eines Begrenzungsrahmens, der die Abbildung jeweils umgibt; und
Entfernen (S104) von zweiten Pixeln außerhalb des Begrenzungsrahmens in einem Bild mit dem kleinsten Bereich des Begrenzungsrahmens, um ein verarbeitetes Bild zu erhalten,
wobei Koordinaten der Pixel in einer ersten Richtung erste Koordinaten sind und Koordinaten in einer zweiten Richtung zweite Koordinaten sind, wobei die erste Richtung senkrecht zu der zweiten Richtung ist, und wobei der Begrenzungsrahmen in dem zu verarbeitenden Bild zwei erste Kanten, die sich in der ersten Richtung erstrecken, und zwei zweite Kanten aufweist, die sich in der zweiten Richtung erstrecken,
wobei das Berechnen des Bereichs des Begrenzungsrahmens, der die Abbildung in dem zu verarbeitenden Bild umgibt, folgende Schritte aufweist:
für das zu verarbeitende Bild, Nehmen (S1031) einer Gruppe der Pixel mit den gleichen ersten Koordinaten als eine Pixelspalte, und in jeder Pixelspalte, Erhalten eines unteren ersten Pixels der ersten Pixel mit dem Maximalwert der zweiten Koordinate und eines oberen ersten Pixels der ersten Pixel mit dem Minimalwert der zweiten Koordinate und Schreiben des unteren ersten Pixels und des oberen ersten Pixels für jede Pixelspalte in ein erstes Array;
Nehmen (S1032) einer Gruppe der Pixel mit den gleichen zweiten Koordinaten als eine Pixelzeile, und in jeder Pixelzeile, Erhalten eines am weitesten rechts gelegenen ersten Pixels der ersten Pixel mit dem Maximalwert der ersten Koordinate und eines am weitesten links gelegenen ersten Pixels der ersten Pixel mit dem Minimalwert der ersten Koordinate und Schreiben des am weitesten rechts gelegenen ersten Pixels und des am weitesten links gelegenen ersten Pixels jeder Pixelzeile in ein zweites Array;
Berechnen (S1033) einer Schnittmenge des ersten Arrays und des zweiten Arrays, um ein anfängliches konvexes Pixelarray zu erhalten;
in dem anfänglichen konvexen Pixelarray, Berechnen (S1034) einer Differenz zwischen dem Maximalwert der ersten Koordinate und dem Minimalwert der ersten Koordinate, um eine erste anfängliche Differenz zu erhalten, und Berechnen einer Differenz zwischen dem Maximalwert der zweiten Koordinate und dem Minimalwert der zweiten Koordinate, um eine zweite anfängliche Differenz zu erhalten; und
Berechnen (S1035) eines Produkts der ersten anfänglichen Differenz und der zweiten anfänglichen Differenz, um den Bereich des Begrenzungsrahmens zu erhalten, der die Abbildung in dem zu verarbeitenden Bild umgibt.

2. Das Verfahren zur Bildverarbeitung gemäß Anspruch 1, wobei das Drehen des zu verarbeitenden Bildes ein Drehen des zu verarbeitenden Bildes mit einem vorbestimmten Intervallwinkel innerhalb eines vorbestimmten Winkelbereichs aufweist, und
wobei das Auswählen von zumindest zwei Bildern aus dem zu verarbeitenden Bild und mehreren Zwischenbildern zum Berechnen eines Bereichs eines Begrenzungsrahmens, der die Abbildung jeweils umgibt, ein Auswählen aller Bilder aus dem zu verarbeitenden Bild und den mehreren Zwischenbildern zum Berechnen des Bereichs des Begrenzungsrahmens aufweist, der die Abbildung jeweils umgibt.

3. Das Verfahren zur Bildverarbeitung gemäß einem der vorhergehenden Ansprüche, wobei das Drehen des zu verarbeitenden Bildes folgende Schritte aufweist:
Bestimmen einer Mitte des Begrenzungsrahmens der Abbildung in dem zu verarbeitenden Bild, um einen anfänglichen Mittelpunkt zu erhalten; und
Drehen von Koordinaten jedes Pixels in dem anfänglichen konvexen Pixelarray um den anfänglichen Mittelpunkt, um ein konvexes Zwischenpixelarray zu erhalten.

4. Das Verfahren zur Bildverarbeitung gemäß Anspruch 3, wobei das Berechnen des Bereichs des Begrenzungsrahmens, der die Abbildung in dem Zwischenbild umgibt, folgende Schritte aufweist:
in dem konvexen Zwischenpixelarray, Berechnen einer Differenz zwischen dem Maximalwert der ersten Koordinate und dem Minimalwert der ersten Koordinate, um eine erste Zwischendifferenz zu erhalten, und Berechnen einer Differenz zwischen dem Maximalwert der zweiten Koordinate und dem Minimalwert der zweiten Koordinate, um eine zweite Zwischendifferenz zu erhalten; und
Berechnen eines Produkts der ersten Zwischendifferenz und der zweiten Zwischendifferenz, um den Bereich des Begrenzungsrahmens zu erhalten, der die Abbildung in dem Zwischenbild umgibt.

5. Das Verfahren zur Bildverarbeitung gemäß Anspruch 2, wobei der vorbestimmte Winkelbereich 0 Grad bis 90 Grad beträgt und der vorbestimmte Intervallwinkel 1 Grad beträgt.

6. Das Verfahren zur Bildverarbeitung gemäß einem der vorhergehenden Ansprüche, wobei die zweiten Pixel transparente Pixel sind und die ersten Pixel nicht-transparente Pixel sind.

7. Das Verfahren zur Bildverarbeitung gemäß einem der vorhergehenden Ansprüche, wobei das Erhalten eines zu verarbeitenden Bildes folgende Schritte aufweist:
Erhalten einer Bilddatei im PhotoShop Document, PSD, -Format; und
Erhalten einer Schicht in der Bilddatei, um das zu verarbeitende Bild zu erhalten, und
wobei nach dem Entfernen der zweiten Pixel außerhalb des Begrenzungsrahmens in dem Bild mit dem kleinsten Bereich des Begrenzungsrahmens, um das verarbeitete Bild zu erhalten, das Verfahren zur Bildverarbeitung ferner folgenden Schritt aufweist: Speichern des verarbeiteten Bildes im Portable Network Graphics, PNG, -Format.

8. Ein Verfahren zur Atlasverarbeitung, das das Verfahren zur Bildverarbeitung gemäß einem der vorhergehenden Ansprüche aufweist, wobei das Erhalten eines zu verarbeitenden Bildes folgenden Schritt aufweist:
Nehmen (S201) einer Schicht in einer zu verarbeitenden Bilddatei als ein zu verarbeitendes Bild, wobei die zu verarbeitende Bilddatei eine Mehrzahl von Schichten aufweist, und
wobei das Verfahren ferner folgenden Schritt aufweist: Zusammensetzen (S203) mehrerer verarbeiteter Bilder zu einem Atlas.

9. Ein Verfahren zur Animationserzeugung, das das Verfahren zur Bildverarbeitung gemäß Anspruch 8 aufweist, wobei das Verfahren ferner folgenden Schritt aufweist:
Erhalten (S301) des Atlas.

10. Eine Vorrichtung zur Bildverarbeitung, die folgende Merkmale aufweist:
eine erste Erhaltungseinrichtung (401) zum Erhalten eines zu verarbeitenden Bildes, wobei das zu verarbeitende Bild eine Mehrzahl von Pixeln aufweist und die Mehrzahl von Pixeln erste Pixel zum Bilden einer Abbildung und zweite Pixel zum Bilden eines Abbildungshintergrunds aufweist;
eine Dreheinrichtung (402) zum Drehen des zu verarbeitenden Bildes, wobei für jeden Drehwinkel ein Zwischenbild erhalten wird;
eine Berechnungseinrichtung (403) zum Auswählen von zumindest zwei Bildern aus dem zu verarbeitenden Bild und mehreren Zwischenbildern zum Berechnen eines Bereichs eines Begrenzungsrahmens, der die Abbildung jeweils umgibt; und
eine Beschneidungseinrichtung (404) zum Entfernen von zweiten Pixeln außerhalb des Begrenzungsrahmens in einem Bild mit dem kleinsten Bereich des Begrenzungsrahmens, um ein verarbeitetes Bild zu erhalten,
wobei Koordinaten der Pixel in einer ersten Richtung erste Koordinaten sind und Koordinaten in einer zweiten Richtung zweite Koordinaten sind, wobei die erste Richtung senkrecht zu der zweiten Richtung ist, und wobei in dem zu verarbeitenden Bild der Begrenzungsrahmen zwei erste Kanten, die sich in der ersten Richtung erstrecken, und zwei zweite Kanten aufweist, die sich in der zweiten Richtung erstrecken,
wobei das Berechnen des Bereichs des Begrenzungsrahmens, der die Abbildung in dem zu verarbeitenden Bild umgibt, folgende Schritte aufweist:
für das zu verarbeitende Bild, Nehmen (S1031) einer Gruppe der Pixel mit den gleichen ersten Koordinaten als eine Pixelspalte, und in jeder Pixelspalte, Erhalten eines unteren ersten Pixels der ersten Pixel mit dem Maximalwert der zweiten Koordinate und eines oberen ersten Pixels der ersten Pixel mit dem Minimalwert der zweiten Koordinate und Schreiben des unteren ersten Pixels und des oberen ersten Pixels für jede Pixelspalte in ein erstes Array;
Nehmen (S1032) einer Gruppe der Pixel mit den gleichen zweiten Koordinaten als eine Pixelzeile, und in jeder Pixelzeile, Erhalten eines am weitesten rechts gelegenen ersten Pixels der ersten Pixel mit dem Maximalwert der ersten Koordinate und eines am weitesten links gelegenen ersten Pixels der ersten Pixel mit dem Minimalwert der ersten Koordinate und Schreiben des am weitesten rechts gelegenen ersten Pixels und des am weitesten links gelegenen ersten Pixels jeder Pixelzeile in ein zweites Array;
Berechnen (S1033) einer Schnittmenge des ersten Arrays und des zweiten Arrays, um ein anfängliches konvexes Pixelarray zu erhalten;
in dem anfänglichen konvexen Pixelarray, Berechnen (S1034) einer Differenz zwischen dem Maximalwert der ersten Koordinate und dem Minimalwert der ersten Koordinate, um eine erste anfängliche Differenz zu erhalten, und Berechnen einer Differenz zwischen dem Maximalwert der zweiten Koordinate und dem Minimalwert der zweiten Koordinate, um eine zweite anfängliche Differenz zu erhalten; und
Berechnen (S1035) eines Produkts der ersten anfänglichen Differenz und der zweiten anfänglichen Differenz, um den Bereich des Begrenzungsrahmens zu erhalten, der die Abbildung in dem zu verarbeitenden Bild umgibt.

11. Die Vorrichtung zur Bildverarbeitung gemäß Anspruch 10, wobei die Mittel folgende Merkmale aufweisen:
zumindest einen Prozessor (012); und
zumindest einen Speicher (011), der einen Computerprogrammcode aufweist, wobei der zumindest eine Speicher und der Computerprogrammcode dazu konfiguriert sind, mit dem zumindest einen Prozessor (012) die Ausführung der Vorrichtung zu veranlassen.

12. Ein computerlesbares Speichermedium, auf dem Computerprogrammanweisungen gespeichert sind, wobei die Computerprogrammanweisungen, wenn dieselben von einem Prozessor ausgeführt werden, den Prozessor veranlassen, das Verfahren gemäß einem der Ansprüche 1 bis 9 durchzuführen.

13. Ein Computerprogrammprodukt, das Computerprogrammanweisungen aufweist, wobei die Computerprogrammanweisungen, wenn dieselben von einem Prozessor ausgeführt werden, den Prozessor veranlassen, das Verfahren gemäß einem der Ansprüche 1 bis 9 durchzuführen.

## Revendications

1. Procédé de traitement de photo mis en œuvre par ordinateur, comprenant :
l'obtention (S101) d'une photo à traiter, dans lequel la photo à traiter comprend une pluralité de pixels, et la pluralité de pixels comprend des premiers pixels destinés à former une image et des deuxièmes pixels destinés à former un arrière-plan de l'image ;
le pivotement (S102) de la photo à traiter, dans lequel pour chaque angle de rotation, une photo intermédiaire est obtenue ;
la sélection (S103) d'au moins deux photos parmi la photo à traiter et plusieurs photos intermédiaires afin de calculer une aire d'un rectangle de délimitation, entourant l'image respectivement ; et
la suppression (S104) des deuxièmes pixels situés en dehors du rectangle de délimitation dans une photo avec la plus petite aire de rectangle de délimitation afin d'obtenir une photo traitée,
dans lequel les coordonnées des pixels dans une première direction sont des premières coordonnées, et les coordonnées dans une deuxième direction sont des deuxièmes coordonnées, dans lequel la première direction est perpendiculaire à la deuxième direction, et dans lequel, dans la photo à traiter, le rectangle de délimitation comprend deux premiers bords s'étendant dans la première direction et deux deuxièmes bords s'étendant dans la deuxième direction.
dans lequel le calcul de l'aire du rectangle de délimitation entourant l'image dans la photo à traiter comprend :
pour que l'image soit traitée, la prise (S1031) d'un groupe des pixels avec les mêmes premières coordonnées comme une colonne de pixel, et, dans chaque colonne de pixel, obtenir un premier pixel du bas parmi les premiers pixels avec la valeur maximale de la deuxième coordonnée et un premier pixel du haut parmi les premiers pixels avec la valeur minimale de la deuxième coordonnée, et écrire le premier pixel du bas et le premier pixel du haut pour chaque colonne de pixel dans un premier tableau ;
la prise (S1032) d'un groupe des pixels avec les mêmes deuxièmes coordonnées comme une ligne de pixel, et, dans chaque ligne de pixel, obtenir un premier pixel le plus à droite parmi les premiers pixels avec la valeur maximale de la première coordonnée et un premier pixel le plus à gauche parmi les premiers pixels avec la valeur minimale de la première coordonnée, et écrire le premier pixel le plus à droite et le premier pixel le plus à gauche de chaque ligne de pixel dans un deuxième tableau ;
le calcul (S1033) d'une intersection entre le premier tableau et le deuxième tableau afin d'obtenir un tableau de pixel convexe initial ;
dans le tableau de pixel convexe initial, le calcul (S1034) d'une différence entre la valeur maximale de la première coordonnée et la valeur minimale de la première coordonnée afin d'obtenir une première différence initiale, et le calcul d'une différence entre la valeur maximale de la deuxième coordonnée et la valeur minimale de la deuxième coordonnée afin d'obtenir une deuxième différence initiale ; et
le calcul (S1035) d'un produit de la première différence initiale et de la deuxième différence initiale afin d'obtenir l'aire du rectangle de délimitation entourant l'image dans la photo à traiter.

2. Procédé de traitement de photo selon la revendication 1, dans lequel la rotation de la photo à traiter comprend la rotation de la photo à traiter à un angle d'intervalle prédéterminé à l'intérieur d'une plage d'angle prédéterminée, et
dans lequel la sélection d'au moins deux photos parmi la photo à traiter et de plusieurs photos intermédiaires pour calculer une aire d'un rectangle de délimitation entourant l'image comprend, respectivement, la sélection de toutes les photos parmi la photo à traiter et les plusieurs photos intermédiaires pour calculer l'aire du rectangle de délimitation entourant l'image, respectivement.

3. Procédé de traitement de photo selon l'une quelconque des revendications précédentes, dans lequel la rotation de la photo à traiter comprend :
la détermination d'un centre du rectangle de délimitation de l'image dans la photo à traiter afin d'obtenir un point central initial ; et
le pivotement des coordonnées de chaque pixel dans le tableau de pixel convexe initial autour du point central initial afin d'obtenir un tableau de pixel convexe intermédiaire.

4. Procédé de traitement de photo selon la revendication 3, dans lequel le calcul de l'aire du rectangle de délimitation entourant l'image dans la photo intermédiaire comprend :
dans le tableau de pixel convexe intermédiaire, le calcul d'une différence entre la valeur maximale de la première coordonnée et la valeur minimale de la première coordonnée afin d'obtenir une première différence intermédiaire, et le calcul d'une différence entre la valeur maximale de la deuxième coordonnée et la valeur minimale de la deuxième coordonnée afin d'obtenir une deuxième différence intermédiaire ; et
le calcul d'un produit de la première différence intermédiaire et de la deuxième différence intermédiaire afin d'obtenir l'aire du rectangle de délimitation entourant l'image dans la photo intermédiaire.

5. Procédé de traitement de photo selon la revendication 2, dans lequel la plage d'angle prédéterminée est comprise entre 0 degrés et 90 degrés, et l'angle d'intervalle prédéterminé est de 1 degré.

6. Procédé de traitement de photo selon l'une quelconque des revendications précédentes, dans lequel les deuxièmes pixels sont des pixels transparents et les premiers pixels sont des pixels non transparents.

7. Procédé de traitement de photo selon l'une quelconque des revendications précédentes, dans lequel l'obtention d'une photo à traiter comprend :
l'obtention d'un fichier photo au format Photoshop Document, PSD ; et
l'obtention d'un calque dans le fichier photo afin d'obtenir la photo à traiter, et
dans lequel, après avoir supprimé les deuxièmes pixels situés en dehors du rectangle de délimitation dans la photo avec l'aire la plus petite du rectangle de délimitation afin d'obtenir la photo traitée, le procédé de traitement de photo comprend en outre : le stockage de la photo traitée au format Portable Network Graphics (PNG).

8. Procédé de traitement d'atlas, comprenant le procédé de traitement de photo selon l'une quelconque des revendications précédentes, dans lequel l'obtention d'une photo à traiter comprend :
la prise (S201) d'un calque d'un fichier photo à traiter en tant que photo à traiter, dans lequel le fichier photo à traiter comprend une pluralité de calques, et
dans lequel le procédé comprend en outre : l'assemblage (S203) de plusieurs photos traitées pour former un atlas.

9. Procédé de production d'une animation, comprenant le procédé de traitement de photo selon la revendication 8, le procédé comprenant en outre :
l'obtention (S301) de l'atlas.

10. Appareil de traitement de photo, comprenant :
un premier moyen d'obtention (401) pour obtenir une photo à traiter, dans lequel la photo à traiter comprend une pluralité de pixels, et la pluralité de pixels comprend des premiers pixels destinés à former une image et des deuxièmes pixels destinés à former un arrière-plan de l'image ;
un moyen de rotation (402) pour pivoter la photo à traiter, dans lequel pour chaque angle de rotation, une photo intermédiaire est obtenue ;
un moyen de calcul (403) pour sélectionner au moins deux photos parmi la photo à traiter et plusieurs photos intermédiaires afin de calculer une aire d'un rectangle de délimitation, entourant l'image respectivement ; et
un moyen de découpage (404) pour supprimer des deuxièmes pixels situés en dehors du rectangle de délimitation dans une photo avec la plus petite aire de rectangle de délimitation afin d'obtenir une photo traitée.
dans lequel les coordonnées des pixels dans une première direction sont des premières coordonnées, et les coordonnées dans une deuxième direction sont des deuxièmes coordonnées, dans lequel la première direction est perpendiculaire à la deuxième direction, et dans lequel, dans la photo à traiter, le rectangle de délimitation comprend deux premiers bords s'étendant dans la première direction et deux deuxièmes bords s'étendant dans la deuxième direction.
dans lequel le calcul de l'aire du rectangle de délimitation entourant l'image dans la photo à traiter comprend :
pour que l'image soit traitée, la prise (S1031) d'un groupe des pixels avec les mêmes premières coordonnées comme une colonne de pixel, et, dans chaque colonne de pixel, l'obtention d'un premier pixel du bas parmi les premiers pixels avec la valeur maximale de la deuxième coordonnée et un premier pixel du haut parmi les premiers pixels avec la valeur minimale de la deuxième coordonnée, et l'écriture du premier pixel du bas et le premier pixel du haut pour chaque colonne de pixel dans un premier tableau ;
la prise (S1032) d'un groupe des pixels avec les mêmes deuxièmes coordonnées comme une ligne de pixel, et, dans chaque ligne de pixel, l'obtention d'un premier pixel le plus à droite parmi les premiers pixels avec la valeur maximale de la première coordonnée et un premier pixel le plus à gauche parmi les premiers pixels avec la valeur minimale de la première coordonnée, et l'écriture du premier pixel le plus à droite et le premier pixel le plus à gauche de chaque ligne de pixel dans un deuxième tableau ;
le calcul (S1033) d'une intersection entre le premier tableau et le deuxième tableau afin d'obtenir un tableau de pixel convexe initial ;
dans le tableau de pixel convexe initial, le calcul (S1034) d'une différence entre la valeur maximale de la première coordonnée et la valeur minimale de la première coordonnée afin d'obtenir une première différence initiale, et le calcul d'une différence entre la valeur maximale de la deuxième coordonnée et la valeur minimale de la deuxième coordonnée afin d'obtenir une deuxième différence initiale ; et
le calcul (S1035) d'un produit de la première différence initiale et de la deuxième différence initiale afin d'obtenir l'aire du rectangle de délimitation entourant l'image dans la photo à traiter.

11. Appareil de traitement de photo selon la revendication 10, dans lequel le moyen comprend :
au moins un processeur (012) ; et
au moins une mémoire (011) comprenant un code de programme informatique, l'au moins une mémoire et code de programme informatique configurés pour, avec l'au moins un processeur (012), assurer le fonctionnement de l'appareil.

12. Support de stockage lisible par ordinateur présentant des instructions de programme informatique stockées dessus, dans lequel les instructions de programme informatique, lorsqu'elles sont exécutées par un processeur, amènent le processeur à mettre en œuvre le procédé selon l'une quelconque des revendications 1 à 9.

13. Produit de programme informatique comprenant des instructions de programme informatique, dans lequel les instructions de programme informatique, lorsqu'elles sont exécutées par un processeur, amènent le processeur à mettre en œuvre le procédé selon l'une quelconque des revendications 1 à 9.
